**Europäisches Patentamt**

**European Patent Office**

**Office européen des brevets**

(19)

(11) Numéro de publication: **0 060 193**
**B1**

(12) # FASCICULE DE BREVET EUROPEEN

(45) Date de publication du fascicule du brevet:
06.03.85

(51) Int. Cl.⁴: **C 02 F 1/48, C 02 F 1/46**

(21) Numéro de dépôt: **82400374.3**

(22) Date de dépôt: **04.03.82**

---

(54) **Dispositif de traitement de l'eau par impulsions électriques à gradation de puissance.**

---

(30) Priorité: **06.03.81 FR 8104510**

(43) Date de publication de la demande:
**15.09.82 Bulletin 82/37**

(45) Mention de la délivrance du brevet:
**06.03.85 Bulletin 85/10**

(84) Etats contractants désignés:
**AT BE CH DE FR GB IT LI LU NL SE**

(56) Documents cités:
**BE - A - 405 508**
**CH - A - 201 629**
**DE - A - 2 846 452**
**FR - A - 1 198 385**
**FR - A - 1 597 236**
**FR - A - 2 057 332**
**FR - A - 2 312 017**
**GB - A - 601 579**

(73) Titulaire: **Freyne, Claude, avenue Allary Le Clos de Boissy no. 5, F-94450 Limeil-Brévannes (FR)**
Titulaire: **Freyne, Jacques, 3bis rue du Rôle, F-91800 Brunoy (FR)**
Titulaire: **Perron, René, F-92260 Fontenay-aux-Roses (FR)**

(72) Inventeur: **Wanner, Jacques, 4, rue Sully Prud'homme, F-92320 Chatillon (FR)**
Inventeur: **Freyne, Claude, avenue Allary Le Clos de Boissy No.5, F-94450 Limeil-Brévannes (FR)**
Inventeur: **Freyne, Jacques, 3bis rue du Rôle, F-91800 Brunoy (FR)**
Inventeur: **Perron, René, F-92260 Fontenay-aux-Roses (FR)**

(74) Mandataire: **Corre, Jacques Denis Paul, Cabinet Regimbeau 26, Avenue Kléber, F-75116 Paris (FR)**

---

## Description

La présente invention concerne un dispositif de traitement d'un liquide, tel que l'eau distribuée, du type permettant le passage répété d'un courant de décharge d'un condensateur entre deux électrodes plongeant dans une chambre de traitement traversée par le liquide.

De tels dispositifs comportent

— une chambre de traitement traversée par le liquide, et munie d'une électrode centrale et d'une électrode périphérique,
— au moins un condensateur,
— un circuit de charge, apte à appliquer aux bornes de ce condensateur une tension de charge de signe, positif ou négativ, prédéterminé,
— un circuit de décharge, apte à décharger le condensateur entre l'électrode centrale et l'électrode périphérique, de manière à soumettre la masse de liquide se trouvant dans la chambre de traitement à une décharge impulsionnelle d'énergie électrique,

le circuit de charge et le circuit de décharge opèrent de manière alternée et répétitive à une fréquence de récurrence prédéterminée.

De préférence, cette fréquence est de l'ordre de 16 Hz, fréquence assurant une efficacité maximum au traitement du liquide. Enfin, un contacteur actionné par le liquide en circulation permet de ne mettre en fonctionnement le dispositif que lorsqu'il y a débit de liquide.

Un tel dispositif est notamment décrit dans le FR-A-2 312 017.

Cependant, ces dispositifs ne sont pas sans présenter des inconvénients, du fait que la puissance fournie lors de la décharge du condensateur est constante. Lorsqu'apparaît un débit, même faible, le dispositif délivre la totalité de la puissance disponible sans tenir compte de la quantité d'eau, faible ou élevée, traversant la chambre. En particulier, lors de faibles débits, la consommation électrique de l'appareil est inutilement élevée, et pour des débits supérieurs à la puissance moyenne disponible du générateur, la puissance fournie est insuffisante. L'inconvénient est d'autant plus gênant que l'appareil est prévu pour pouvoir traiter des débits maxima plus élevés: la consommation peut devenir prohibitive en considération du débit réel traité.

Pour remédier à ces difficultés, la présente invention propose un dispositif de traitement du type précité, permettant de graduer la puissance délivrée en fonction du débit.

Il est caractérisé en ce qu'il comporte:

— des moyens de mesure du débit d'eau traversant la chambre de traitement,
— des moyens aptes à asservir à la valeur ainsi mesurée du débit la puissance des décharges impulsionnelles fournies par le circuit de décharge.

Avantageusement, le dispositif comporte une batterie de condensateurs, et les moyens aptes à faire varier la puissance comportent un circuit permettant de modifier la valeur de la capacité totale desdits condensateurs en fonction du débit.

En outre, il a été constaté que le fait de laisser une polarité inchangée du potentiel sur l'électrode centrale avait pour résultat de provoquer un dépôt de résidus sur celle-ci, nécessitant un nettoyage périodique. Pour éviter la formation de ce dépôt, la présente invention est munie de circuits permettant d'inverser périodiquement le sens de charge de l'armature du condensateur qui sera reliée à l'électrode centrale de la chambre de traitement.

D'autres caractéristiques et avantages l'invention apparaîtront à la lecture de la description détaillée que va suivre, faite en référence aux dessins annexés, où:

— la figure 1 est une vue d'ensemble montrant la liaison entre les différents circuits;
— la figure 2 détaille un mode préférentiel de réalisation du dispositif;
— la figure 3 représente la forme du courant de décharge du condensateur dans le mode de réalisation préféré, pour des valeurs croissantes du débit;
— la figure 4 représente la forme du courant de décharge dans une première variante de réalisation;
— la figure 5 représente la forme du courant de décharge dans une seconde variante de réalisation.

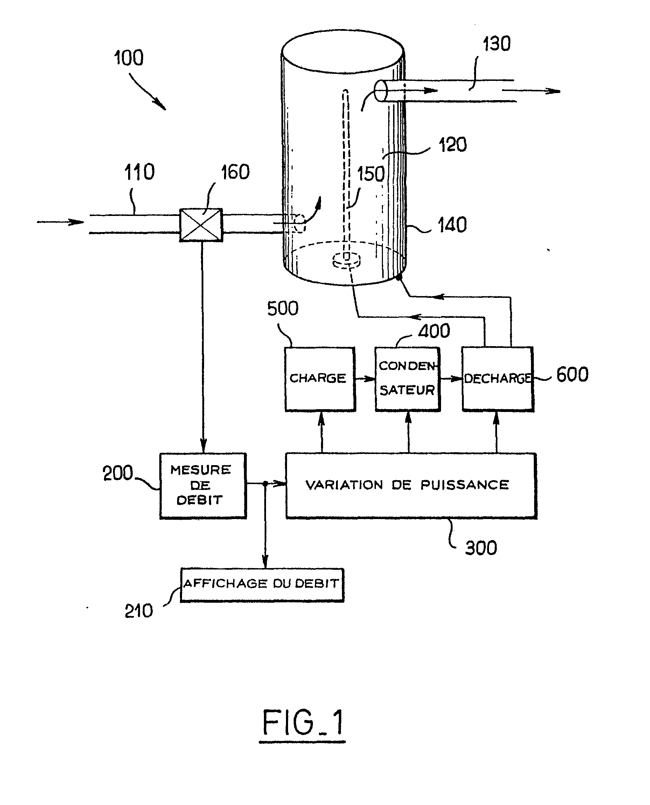

Sur la figure 1, on peut voir le circuit de circulation d'eau 100 composé d'un tuyau d'entrée 110, d'une chambre de traitement 120, et d'un tuyau de sortie 130. La forme de la chambre de traitement est sensiblement cylindrique, son enveloppe extérieure est métallique et constitue l'électrode périphérique 140. L'autre électrode 150 est disposée axialement à l'intérieur de la chambre de traitement.

Un capteur de débit 160 est inséré dans le circuit d'entrée pour fournir un signal électrique proportionnel au débit de liquide.

Le circuit électrique se compose d'un circuit de mesure du débit 200 permettant de traiter le signal issu du capteur 160, et pouvant commander un circuit 210 d'affichage visualisant la valeur mesurée du débit, d'un circuit 300 de variation de puissance en fonction du débit recevant l'information fournie par le circuit 200 de mesure du débit, un condensateur 400 chargé par un circuit de charge 500 et susceptible d'être déchargé entre les deux électrodes 140 et 150 par l'intermédiaire d'un circuit de décharge 600.

Le circuit 300 permet de modifier les paramètres de la charge et de la décharge afin de faire varier la puissance totale délivrée à la chambre de traitement 120.

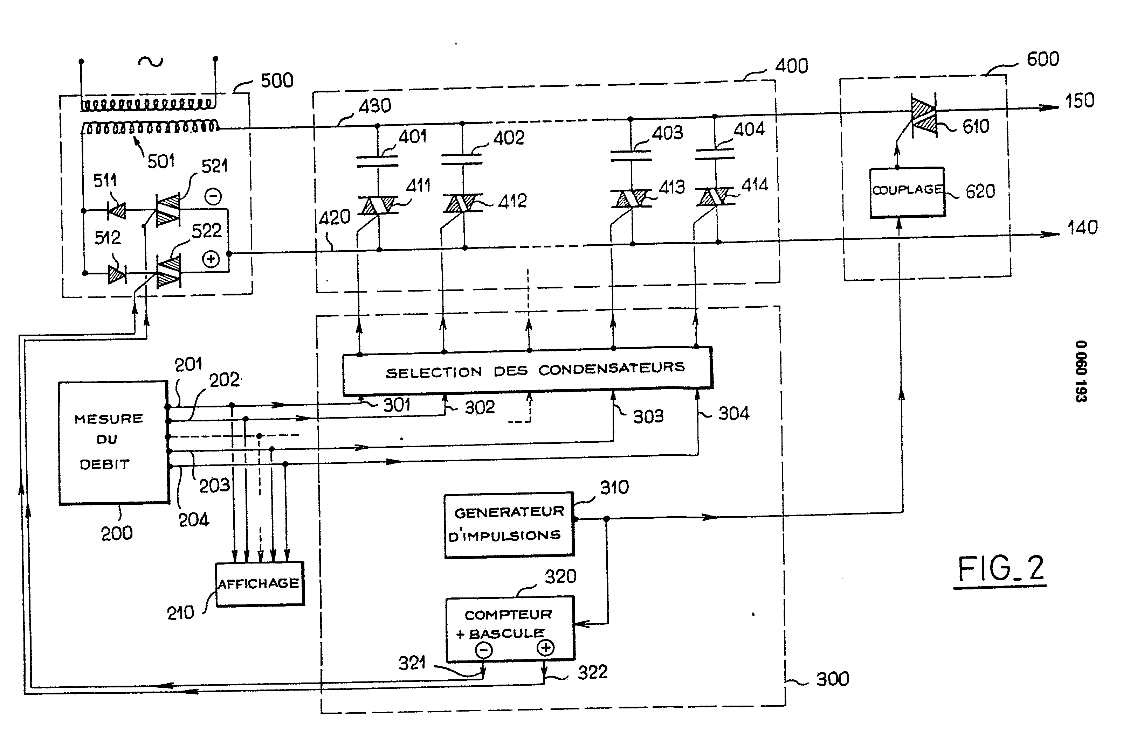

La figure 2 montre un mode préférentiel de réalisation du dispositif. Le circuit de mesure du débit 200 possède une pluralité de sorties logiques 201, 202, . . . 203, 204 telles que le nombre de sorties à l'état »1« soit fonction du débit mesuré par le capteur. Le circuit d'affichage 210 est relié à ces sorties, et peut être par exemple constitué d'autant de diodes électroluminescentes que de sorties logiques, chaque diode indiquant l'état logique de la sortie à laquelle elle est reliée. Le nombre de diodes allumées donne ainsi une indication sur la valeur du débit de liquide. Les sorties 201 . . . 204 sont reliées aux entrées 301 . . . 304 d'un circuit de sélection des condensateurs, actionnant les gâchettes d'une pluralité de triacs 411 . . . 414 en nombre égal au nombre de bornes d'entrées 301 . . . 304. Chaque triac est relié d'une part à un premier conducteur commun 420, d'autre part à l'armature d'un condensateur 401 . . . 404 dont l'autre armature est reliée à un second conducteur commun 430. Les condensateurs 401 . . . 404 sont chargés au moyen du circuit 500 constitué d'un transformateur 501 relié d'une part directement au conducteur 430, d'autre part au conducteur 420 par l'intermédiaire d'un circuit formé de deux branches parallèles, chaque branche comportant une diode 511 ou 512 en série avec un triac 521 ou 522, les deux diodes étant montées dans des sens différents dans chacune des deux branches.

Les condensateurs sont déchargés entre les électrodes 140 et 150 par un triac 610 pouvant être rendu conducteur par action d'un circuit de couplage 620 actionnant sa gâchette.

Les cycles de charge et décharge sont commandés par un générateur d'impulsions à fréquence fixe 310 dont la sortie est reliée, d'une part au circuit de couplage 620 actionnant le triac 610, d'autre part à un compteur 320 déclenchant une bascule dont les sorties 321 et 322 sont reliées aux gâchettes des triacs 521 et 522 du circuit de charge.

Lors du fonctionnement les sorties logiques 201 . . . 204 sont activées en plus ou moins grand nombre. En l'absence de débit elles sont toutes à l'état »0«, pour un faible débit seule la sortie 201 est à l'état »1«, quand le débit augmente les deux sorties 201 et 202 passent à l'état »1«, . . ., et pour le débit maximum la totalité des sorties 201 . . . 204 est à l'état »1«. Ces sorties vont rendre conducteur un nombre plus ou moins grand de triacs 411 . . . 414. Pour en débit nul ou très faible tous les triacs sont bloqués, pour le débit maximum ils sont tous conducteurs. Un tel circuit permet donc de commuter un nombre variable de condensateurs 401 . . . 404 selon le débit mesuré. En augmentant la capacité on augmente l'énergie libérée dans la chambre de traitement.

Préférentiellement, tous les condensateurs 401 . . . 404 ont la même valeur, permettant ainsi une progression linéaire de la capacité, mais il est possible d'imaginer d'autres variantes sans sortir pour autant du domaine de l'invention. En particulier, une variante consiste à ne commuter qu'un seul condensateur à la fois, mais d'avoir une batterie de condensateurs de capacités croissantes, le condensateur 401 ayant par exemple la capacité la plus faible, le condensateur 404, la capacité la plus élevée. On obtient encore, mais de façon différente, une série échelonnée de valeurs de la capacité 400. Une fois sélectionnée la valeur désirée de la capacité, celle-ci sera chargée par le circuit 500. Les triacs 521 et 522 sont commandés par le circuit 320, de telle sorte que l'un deux soit conducteur quand l'autre est bloqué. Si par exemple le triac 521 est bloqué, le conducteur 420 sera porté à un potentiel positif par rapport au conducteur 430. Dans le cas contraire, il sera à un potentiel négatif. On peut ainsi, par commande des triacs 521 et 522, alterner le sens de charge du condensateur 400, donc changer la polarité des impulsions de décharge dans les électrodes 140 et 150.

La décharge a lieu en rendant le triac 610 conducteur; le condensateur 400 peut ainsi se décharger entre les électrodes 140 et 150 à chaque impulsion délivrée par le générateur 310. Ces impulsions serviront également d'impulsions d'horloge pour le compteur 320 qui provoque, au bout d'un temps donné, le changement d'état d'une bascule dont les sorties inversées 321 et 322 vont commander les triacs 521 et 522. On peut ainsi, par exemple toutes les demi-heures, provoquer l'inversion automatique du sens de charge des condensateurs.

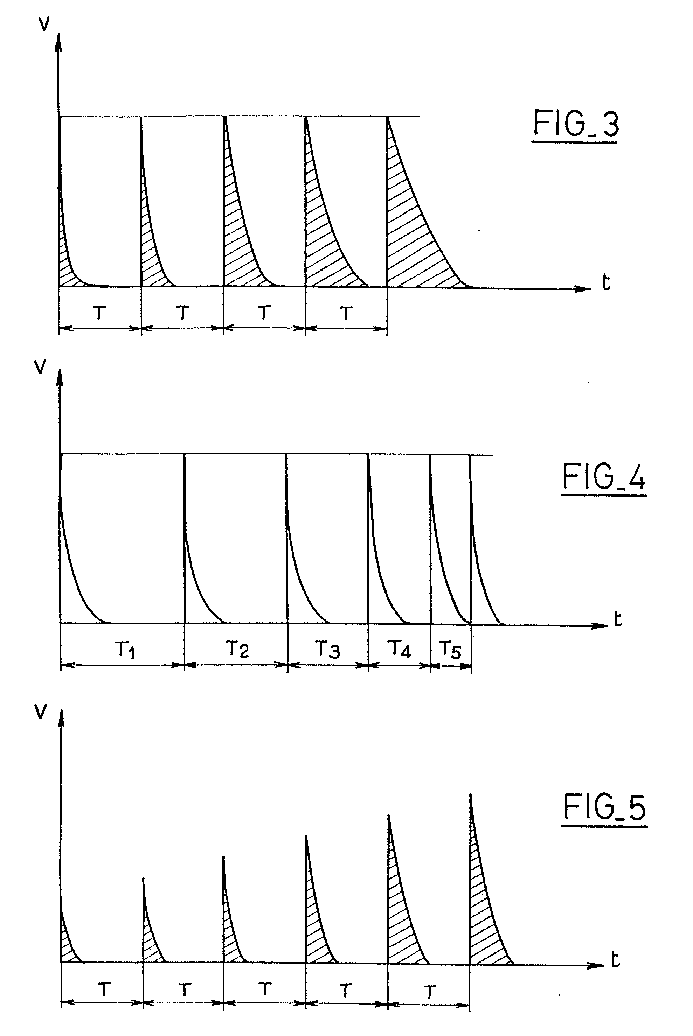

La figure 3 montre la forme des impulsions délivrées aux électrodes pour des valeurs croissantes du débit. En abscisse est porté le temps, en ordonnée est portée la tension de décharge. On voit que, des trois paramètres: fréquence de répétition, tension de charge, et capacité du condensateur, les deux premières valeurs restent constantes mais que, en augmentant la capacité, on augmente par le fait même l'énergie d'livrée, proportionnelle à l'aire hachurée.

La figure 4 se réfère à une variante possible du dispositif, où l'on utilise au lieu de la batterie de capacités 400 un condensateur unique, chargé à tension constante, mais où on fait varier la fréquence du générateur d'impulsions 310 en fonction du débit, la répétition des impulsions étant plus rapide pour des débits plus élevés. L'énergie de chaque décharge est constante, mais la puissance totale, égale à l'énergie totale (nombre d'impulsions × énergie d'une impulsion) divisée par le temps, va croissant avec le débit.

La figure 5 montre les impulsions qu'on pourrait avoir en faisant varier la tension de charge en fonction du débit, à fréquence et capacité constantes: L'énergie de chaque décharge, ici encore représentée par l'aire hachurée, augmente proportionnellement au débit d'eau.

Il est bien entendu que la description qui précède n'est donnée qu'à titre d'exemple non limitatif et que de nombreuses variantes peuvent être envisagées sans sortir pour autant du domaine de l'invention.

**Revendications**

1. Un dispositif de traitement d'un liquide, tel que l'eau distribuée, du type comportant:

— une chambre de traitement (120) traversée par le liquide, et munie d'une électrode centrale (150) et d'une électrode périphérique (140),

— au moins un condensateur (400),

— un circuit de charge (500), apte à appliquer aux bornes de ce condensateur une tension de charge de signe, positif ou négatif, prédéterminé,

— un circuit de décharge (600), apte à décharger le condensateur entre l'électrode centrale et l'électrode périphérique, de manière à soumettre la masse de liquide se trouvant dans la chambre de traitement à une décharge impulsionnelle d'énergie électrique,

le circuit de charge et le circuit de décharge opérant de manière alternée et répétitive à une fréquence de récurrence prédéterminée, caractérisé en ce qu'il comprend également:

— des moyens (160, 200) de mesure du débit d'eau traversant la chambre de traitement,

— des moyens (300) aptes à asservir à la valeur ainsi mesurée du débit la puissance des décharges impulsionnelles fournies par le circuit de décharge.

2. Dispositif selon la revendication 1, caractérisé en ce que le dispositif comporte une batterie de condensateurs (401—404), et en ce que les moyens aptes à asservir au débit mesuré la puissance des décharges impulsionnelles comportent un circuit (300, 411—414) permettant de modifier la valeur de la capacité totale desdits condensateurs en fonction du débit.

3. Dispositif selon la revendication 2, caractérisé en ce que le sens de charge de l'armature du condensateur qui sera reliée à l'électrode centrale de la chambre de traitement est périodiquement inversé, la fréquence des inversions étant un sous-multiple de ladite fréquence de récurrence.

4. Dispositif selon la revendication 1, caractérisé en ce que les moyens aptes à asservir au débit mesuré la puissance des décharges impulsionnelles consistent en un générateur d'impulsions de fréquence variable en fonction du débit et coopérant avec les circuits de charge et de décharge du condensateur.

5. Dispositif selon la revendication 1, caractérisé en ce que les moyens aptes à asservir au débit mesuré la puissance des décharges impulsionnelles consistent en un circuit modifiant une tension en fonction du débit et coopérant avec le circuit de charge du condensateur.

**Patentansprüche**

1. Vorrichtung zur Behandlung einer Flüssigkeit, wie abgegebenen Wassers, mit:

— einer von der Flüssigkeit durchflossenen und mit einer zentralen Elektrode (150) und einer peripheren Elektrode (140) versehenen Behandlungskammer (120),

— wenigstens einem Kondensator (400),

— einem Ladekreis (500) zum Anlegen einer Ladespannung mit vorbestimmten positiven oder negativen Vorzeichen an die Kondensatorklemmen,

— einem Entladekreis (600) zum Entladen des Kondensators zwischen der zentralen und der peripheren Elektrode, um die in der Behandlungskammer befindliche Flüssigkeit einer impulsförmigen Entladung der elektrischen Energie zu unterwerfen,

— wobei der Ladekreis und der Entladekreis alternierend und wiederholt bei einer vorgegebenen Rücklauffrequenz arbeiten,

dadurch gekennzeichnet, daß sie auch:

— eine Einrichtung (160, 200) zum Messen der Menge des die Behandlungskammer durchfließenden Wassers, sowie

— eine Einrichtung (300) aufweist, mit der die Leistung der vom Entladekreis gelieferten impulsförmigen Entladungen an den gemessenen Wert der Durchflußmenge angleichbar ist.

2. Vorrichtung nach Anspruch 1, dadurch gekennzeichnet, daß sie eine Gruppe von Kondensatoren (401—404) aufweist und daß die Einrichtung, mit der die Leistung der vom Entladekreis gelieferten impulsförmigen Entladungen an die gemessene Durchflußmenge angleichbar ist, einen Kreis (300, 411—414) zum Ändern des Gesamtkapazitätswertes der Kondensatoren abhängig von der Durchflußmenge aufweist.

3. Vorrichtung nach Anspruch 2, dadurch gekennzeichnet, daß die Richtung der Aufladung des Belages des Kondensators, der mit der zentralen Elektrode der Behandlungskammer verbunden wird, periodisch umgekehrt wird, wobei die Umkehrfrequenz dem Wert nach in der genannten Rücklauffrequenz mehrfach enthalten ist.

4. Vorrichtung nach Anspruch 1, dadurch gekennzeichnet, daß die Einrichtung, mit der die Leistung der vom Entladekreis gelieferten impulsförmigen Entladungen an die gemessene Durchflußmenge angleichbar ist, aus einem Impulsgenerator mit abhängig von der Durchflußmenge variierbarer Frequenz besteht, der mit den Lade- und Entladekreisen des Kondensators zusammenarbeitet.

5. Vorrichtung nach Anspruch 1, dadurch gekennzeichnet, daß die Einrichtung, mit der die Leistung der vom Entladekreis gelieferten impulsförmigen Entladungen an die gemessene Durchflußmenge angleichbar ist, aus einem Kreis besteht, der eine Spannung abhängig von der Durchflußmenge ändert und mit dem Ladekreis des Kondensators zusammenarbeitet.

## Claims

1. An apparatus for the treatment of a liquid, such as mains water, of the type comprising:

— a treatment chamber (120) through which the liquid passes and which is provided with a central electrode (150) and a peripheral electrode (140),
— at least one capacitor (400),
— a charging circuit (500) able to apply a charging voltage of predetermined positive or negative sign to the terminals of this capacitor,
— a discharge circuit (600) able to discharge the capacitor between the central electrode and the peripheral electrode, in order to subject the mass of liquids located in the treatment chamber to a discharge of electrical energy in pulses,

the charging circuit and the discharge circuit operating alternately and repetitively at a predetermined recurrence frequency, characterised in that it also comprises:

— means (160, 200) for measuring the rate of flow of water passing through the treatment chamber,
— means (300) able to govern the power of the discharge pulses provided by the discharge circuit by the measured value of the rate of flow.

2. Apparatus according to claim 1, characterised in that the apparatus comprises a set of capacitors (401—404) and in that the means able to govern the power of the discharge pulses by the measured rate of flow comprise a circuit (300, 411—414) making it possible to modify the value of the total capacitance of said capacitors depending on the rate of flow.

3. Apparatus according to claim 2, characterised in that the charging direction of the plate of the capacitor which will be connected to the central electrode of the treatment chamber is periodically reversed, the frequency of the reversals being a sub-multiple of said recurrence frequency.

4. Apparatus according to claim 1, characterised in that the means able to govern the power of the discharge pulses by the rate of flow measured consist of a generator producing pulses of variable frequency as a function of the rate of flow and cooperating with the charging and discharge circuits of the capacitor.

5. Apparatus according to claim 1, characterised in that the means able to govern the power of the discharge pulses by the measured rate of flow consist of a circuit modifying a voltage as a function of the rate of flow and cooperating with the charging circuit of the capacitor.

FIG_1

FIG_2

0 060 193

0 060 193

FIG_3

FIG_4

FIG_5

11